# FASCICULE DE BREVET EUROPEEN

(11) **EP 2 979 996 B1**
(45) Date de publication et mention de la délivrance du brevet: **01.11.2017**
(21) Numéro de dépôt: 15177644.0
(22) Date de dépôt: 21.07.2015
(51) Int. Cl.: B65G 1/04, B65G 1/06

(54) **SYSTÈME AUTOMATISÉ DE STOCKAGE/DÉSTOCKAGE COMPRENANT UN ÉLÉVATEUR COOPÉRANT AVEC UN DISPOSITIF DE TRANSFERT ET UN SÉQUENCEUR**
AUTOMATISIERTES SYSTEM ZUM EIN-/AUSLAGERN, DAS EINEN HUBSTAPLER UMFASST, DER MIT EINER TRANSFERT- UND EINER ABLAUFSTEUERUNGSEINHEIT ZUSAMMENARBEITET
AUTOMATED STORAGE/PICKING SYSTEM COMPRISING AN ELEVATOR ENGAGING WITH A TRANSFER DEVICE AND A SEQUENCER

(30) Priorité: 29.07.2014 FR 1457341
(43) Date de publication de la demande: 03.02.2016
(73) Titulaire: SAVOYE, 21000 Dijon (FR)
(72) Inventeur: COLLIN, Jean-Michel, 21190 Merceuil (FR); PIETROWICZ, Stéphane, 21220 Fixin (FR)
(74) Mandataire: Vidon Brevets & Stratégie

(56) Documents cités:
- EP-A1- 1 681 247
- WO-A1-2014/023730
- CA-A1- 2 735 988
- DE-U1-202004 008 678
- DE-U1-202006 003 068
- JP-A- S62 249 818
- US-A1- 2008 000 754

## Description

### 1. DOMAINE DE L'INVENTION

Le domaine de l'invention est celui de la logistique.

Plus précisément, l'invention concerne un système automatisé de stockage/déstockage comprenant notamment les éléments suivants : un système de pilotage, au moins un ensemble de rangement comprenant plusieurs niveaux sur lesquels des charges peuvent être prélevées ou déposées, au moins un convoyeur d'interface pour des entrées et/ou sorties de charges dans/hors du système, et au moins un élévateur pour un transfert de charges entre le au moins un convoyeur d'interface et le au moins un ensemble de rangement.

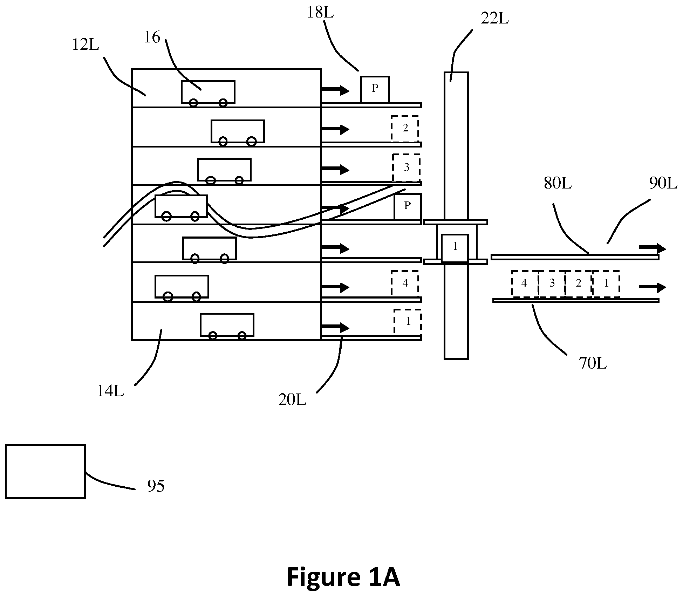

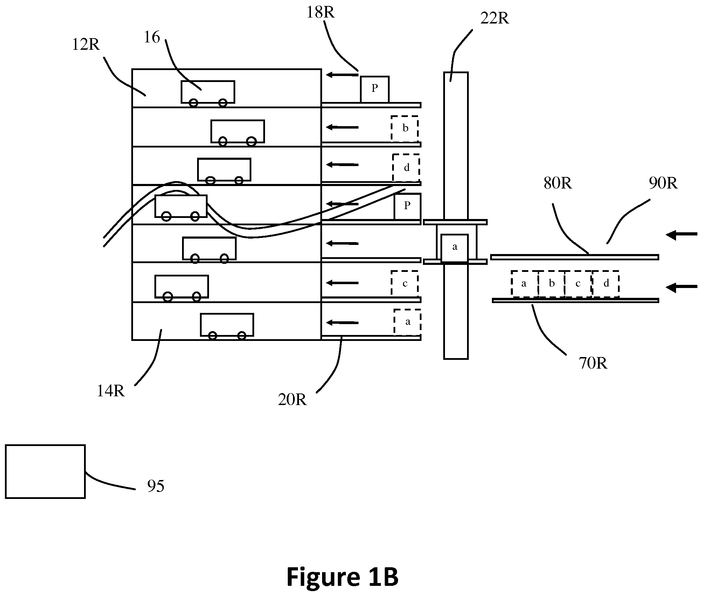

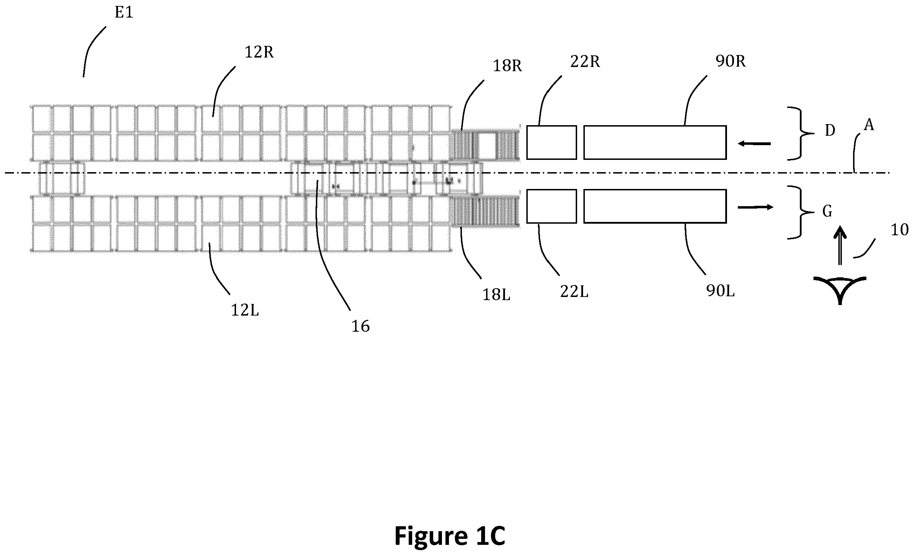

L'invention s'applique notamment, mais non exclusivement, dans le cas où chaque ensemble de rangement multiniveau est tel que décrit ci-après en relation avec les figures 1A, 1B et 1C.

Plus généralement, la présente invention peut s'appliquer dans tout contexte où des charges (de type bac, carton, plateau ou autre) sont prélevées ou mises à disposition sur un ensemble de niveaux.

### 2. ARRIÈRE-PLAN TECHNOLOGIQUE

Les **figures 1A****,** **1B** **et** **1C** (vue de côté de la partie gauche, vue de côté de la partie droite et vue de dessus respectivement) illustrent un exemple de système automatisé de stockage/déstockage selon l'art antérieur.

Dans cet exemple, le système comprend un ensemble de rangement E1 comprenant deux étagères 12L et 12R, à niveaux superposés (14L et 14R) et subdivisés en emplacements (double profondeur dans cet exemple) destinés à accueillir chacun deux charges P.

L'ensemble de rangement E1 comprend également une station tampon de sortie 18L et une station tampon d'entrée 18R. La station tampon de sortie 18L est positionnée à une extrémité de l'étagère 12L, et est adjacente à celle-ci. Elle est constituée d'un ensemble de convoyeurs tampons de sortie 20L. Le nombre de convoyeurs tampons de sortie 20L est le même que celui de niveaux 14L dans l'étagère 12L. La station tampon d'entrée 18R est positionnée à une extrémité de l'étagère 12R, et est adjacente à celle-ci. Elle est constituée d'un ensemble de convoyeurs tampons d'entrée 20R. Le nombre de convoyeurs tampons d'entrée 20R est le même que celui de niveaux 14R dans l'étagère 12R. Les convoyeurs tampons 20R et 20L sont par exemple de type motorisés à double sens de rotation.

Une allée dessert les deux étagères 12R et 12L et comprend, à chaque niveau, une voie de déplacement. Des navettes 16 (par exemple une par niveau, de type motorisée et mono ou multicharge) permettent, en se déplaçant sur les voies, un transfert de charges entre les emplacements (au sein des étagères 12R et 12L) et les convoyeurs tampons 20R, 20L. Chaque navette 16 d'un niveau donné a accès aux emplacements (au sein des étagères 12R et 12L) et aux convoyeurs tampon 20R et 20L de ce niveau donné.

Afin de faciliter la description, on considère l'axe (référencé A sur la figure 1C) de l'allée entre les deux étagères 12R et 12L, et on appelle « partie droite du système » (référencée D sur la figure 1C) et « partie gauche du système » (référencée G sur la figure 1C) les deux parties du système se trouvant de part et d'autre de cet axe A. On notera que la « vue de côté de la partie droite », présentée sur la figure 1B, et la « vue de côté de la partie gauche », présentée sur la figure 1A, sont toutes les deux des vues selon une même direction (référencée 10 sur la figure 1C). Cette remarque est valable pour l'ensemble des vues de côté des parties droite et gauche présentées par la suite.

Le système comprend également deux élévateurs 22R et 22L. Chaque élévateur est positionné en bout des convoyeurs tampon 20R et 20L situés en extrémité d'une des étagères 12R et 12L. Chaque élévateur possède un seul niveau permettant de transporter une charge délivrée par un des convoyeurs tampons 20L et 20R. Dans une première variante connue (non représentée), chaque élévateur possède un seul niveau permettant de transporter deux charges. Dans une seconde variante connue (non représentée), chaque élévateur possède deux niveaux superposés permettant chacun de transporter deux charges (soit une capacité totale de quatre charges).

Chaque élévateur 22R et 22L marque un arrêt piloté face à chaque convoyeur tampon 20R et 20L. Ces arrêts permettent de réaliser les entrées/sorties des charges dans les étagères 12R et 12L.

Chaque élévateur est positionné entre d'une part les convoyeurs tampons 20R et 20L situés en extrémité d'une des étagères 12R et 12L, et d'autre part des convoyeurs d'interface pour des entrées/sorties de charges dans/hors du système. Dans l'exemple illustré, l'élévateur 22R de la partie droite du système est associé à deux convoyeurs d'interface d'entrée 70R et 80R, formant une station d'interface d'entrée 90R (cf. figure 1B), et l'élévateur 22L de la partie gauche du système est associé à deux convoyeurs d'interface de sortie 70L et 80L, formant une station d'interface de sortie 90L (cf. figure 1A). En d'autres termes, chaque élévateur 22R et 22L permet un transfert de charges entre : d'une part les convoyeurs tampons 20R et 20L en extrémité d'une des étagères 12R et 12L, et d'autre part les convoyeurs d'interface d'entrée 70R et 80R et les convoyeurs d'interface de sortie 70L et 80L.

Les convoyeurs d'interface d'entrée 70R et 80R, l'élévateur 22R et les convoyeurs tampons 20R (c'est-à-dire des éléments de la partie droite), ainsi que les navettes 16 (communes aux parties droite et gauche), réalisent l'entrée des charges dans les deux étagères 12R et 12L. Les convoyeurs d'interface de sortie 70L et 80L, l'élévateur 22L et les convoyeurs tampons 20L (c'est-à-dire des éléments de la partie gauche), ainsi que les navettes 16 (communes aux parties droite et gauche), réalisent la sortie des charges hors des deux étagères 12R et 12L. Les navettes ont accès aux emplacements de l'étagère 12R de la partie droite, comme aux emplacements de l'étagère 12L de la partie gauche.

Un système de pilotage (symbolisé par le rectangle référencé 95) pilote au moins certains des éléments de l'ensemble de rangement E1 (par exemple les convoyeurs tampons et les navettes), les élévateurs 22R et 22L et les convoyeurs d'interface d'entrée 70R et 80R et de sortie 70L et 80L.

Un inconvénient d'un tel système de stockage et déstockage selon l'art antérieur est que le temps de cycle de chaque élévateur s'avère relativement important au vu du nombre d'actions d'entrée ou de sortie effectuées. En effet, à chaque action d'entrée ou de sortie d'une charge, une moitié de cycle est « perdue » dans le déplacement de l'élévateur à vide et ne consiste pas en une action valorisable.

Ni la première variante connue précitée (chaque élévateur possède un seul niveau permettant de transporter deux charges), ni la seconde variante connue (chaque élévateur possède deux niveaux superposés permettant chacun de transporter deux charges) ne permettent de pallier cet inconvénient.

Plus généralement, une des problématiques rencontrées dans la conception des systèmes de stockage déstockage automatisé est d'optimiser la mise en oeuvre de chacun des éléments constituant le système, et notamment des élévateurs, et d'optimiser la cadence générale du système permettant par exemple d'atteindre un objectif en termes de préparation de commande (c'est-à-dire un nombre de charges mises à disposition pour préparer un ensemble de commandes en un temps donné).

Une autre problématique réside dans la capacité à pouvoir délivrer en sortie du système les charges dans un ordre voulu. Cette problématique est connue sous le terme de contrainte de séquencement.

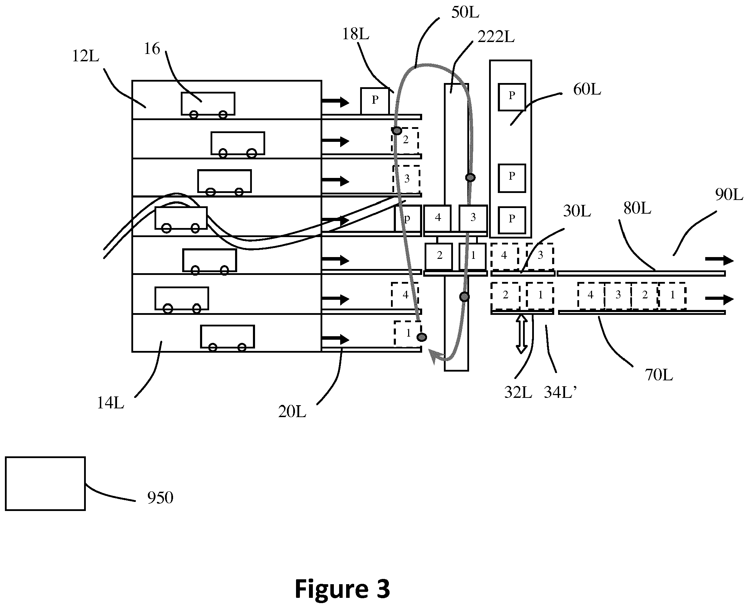

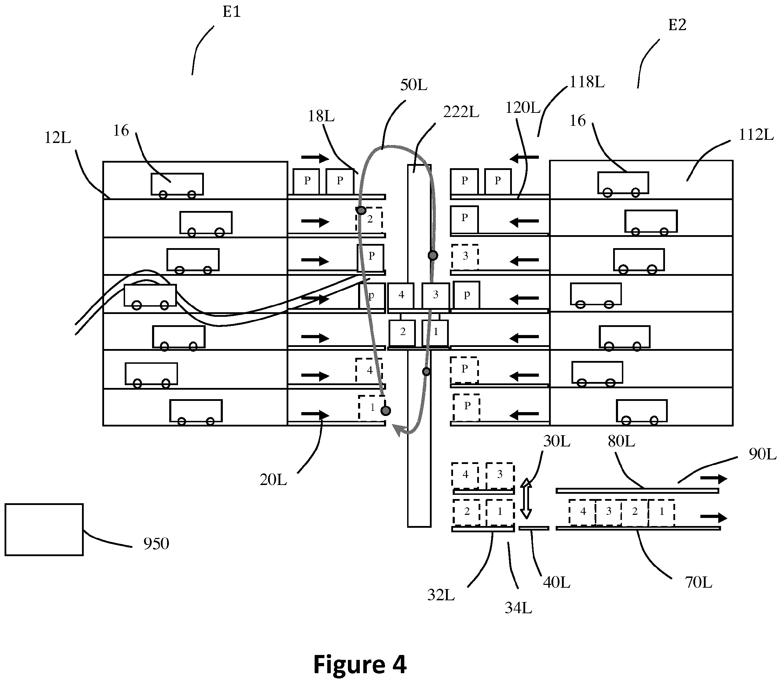

Le document WO2014/023730A1 présente un régulateur d'écoulement de produits, doté d'une unité de stockage intermédiaire permettant de découpler un flux entrant de produits par rapport à un dispositif en aval. Dans le cas de la figure 3, le régulateur comprend un premier ascenseur tampon 4, un ascenseur d'entrée 2, une unité de stockage intermédiaire 1, un ascenseur de sortie 3 et un deuxième ascenseur tampon 5. Dans le cas de la figure 4, le régulateur comprend un premier dispositif de déviation 13 (pour dévier les produits depuis au moins un niveau d'entrée vers les différents niveaux d'un premier dispositif tampon 11), ce premier dispositif tampon, un ascenseur d'entrée 2, une unité de stockage intermédiaire 1, un ascenseur de sortie 3, un deuxième dispositif tampon 12 et un deuxième dispositif de déviation 14 (pour dévier les produits depuis différents niveaux du deuxième dispositif tampon 12 vers au moins un niveau de sortie). Les principes FIFO et FILO sont évoqués. Pour augmenter le débit, les produits peuvent être transférés vers/depuis l'unité de stockage intermédiaire simultanément sur plusieurs niveaux d'ascenseur. Cette technique n'utilise pas de navette.

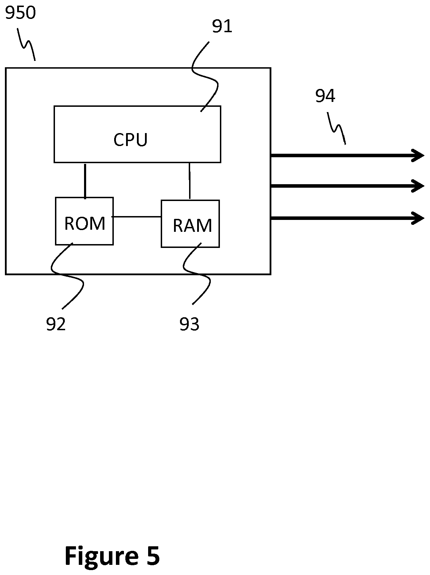

Le document CA2735988A1 décrit un système de stockage comprenant des navettes qui prélèvent ou déposent des charges dans un ensemble de rangement. Les navettes alimentent ou sont alimentées par un ascenseur (élévateur d'entrée/sortie). La figure 5 présente la partie gauche d'un système automatisé de stockage/déstockage comprenant : un ensemble de rangement (comprenant une étagère (12L) comprenant elle-même plusieurs niveaux sur lesquels des charges peuvent être prélevées ou déposées par une navette, ainsi qu'une station tampon de stockage/déstockage (18L), dont chaque niveau comprend un convoyeur tampon positionné à une extrémité d'un niveau de l'étagère) ; des convoyeurs d'interface de sortie (32L) (pour des sorties de charges hors du système) et d'interface d'entrée (30L) (pour des entrées de charges dans le système) ; et un élévateur d'entrée/sortie (22) (comprenant une plateforme mobile verticalement à deux niveaux (34, 35)). Le fait que la plateforme mobile comprenne deux niveaux permet, en combinaison avec le fait que les directions de convoyage des convoyeurs tampons sont alternées d'un niveau à l'autre, d'effectuer simultanément une entrée et une sortie (i.e. stockage et déstockage simultanément).

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant d'accroître de façon significative la cadence générale d'un système automatisé de stockage/déstockage (par rapport aux systèmes connus, notamment ceux du type décrit plus haut en relation avec les figures 1A, 1B et 1C), tout en respectant les contraintes de séquencement.

Un autre objectif d'au moins un mode de réalisation de l'invention est de fournir une telle technique qui soit simple à mettre en oeuvre et peu coûteuse.

Un objectif complémentaire d'au moins un mode de réalisation de l'invention est de fournir une telle technique qui soit compatible avec un fonctionnement multi-flux (un ou plusieurs flux de charges en entrée et/ou un ou plusieurs flux de charges en sortie).

### 4. EXPOSÉ DE L'INVENTION

Dans un mode de réalisation particulier de l'invention, il est proposé un procédé de déstockage selon la revendication 1. Dans un autre mode de réalisation particulier de l'invention, il est proposé un procédé de déstockage selon la revendication 2. Dans un mode de réalisation particulier de l'invention, il est proposé un procédé de stockage selon la revendication 3. Dans un autre mode de réalisation particulier de l'invention, il est proposé un procédé de stockage selon la revendication 4.

Dans un mode de réalisation particulier de l'invention, il est proposé un système automatisé de stockage/déstockage comprenant : un système de pilotage, au moins un ensemble de rangement comprenant plusieurs niveaux sur lesquels des charges peuvent être prélevées ou déposées, au moins un convoyeur d'interface pour des entrées et/ou

Dans un mode de réalisation particulier de l'invention, il est proposé un procédé de déstockage selon la revendication 1.

Dans un autre mode de réalisation particulier de l'invention, il est proposé un procédé de déstockage selon la revendication 2.

Dans un autre mode de réalisation particulier de l'invention, il est proposé un procédé de stockage selon la revendication 3.

Dans un autre mode de réalisation particulier de l'invention, il est proposé un procédé de stockage selon la revendication 4.

Dans un mode de réalisation particulier de l'invention, il est proposé un système automatisé de stockage/déstockage comprenant : un système de pilotage, au moins un ensemble de rangement comprenant plusieurs niveaux sur lesquels des charges peuvent être prélevées ou déposées, au moins un convoyeur d'interface pour des entrées et/ou sorties de charges dans/hors du système, et au moins un élévateur pour un transfert de charges entre le au moins un convoyeur d'interface et le au moins un ensemble de rangement. Le au moins un élévateur est un élévateur multiniveau, et le système automatisé de stockage/déstockage comprend en outre :
- au moins un dispositif de transfert multiniveau apte à recevoir simultanément, sur plusieurs niveaux, un ensemble de charges destinées à ou provenant du au moins un élévateur ; et
- au moins un séquenceur pourvu de moyens de déplacement vertical et apte à transférer des charges entre le au moins un dispositif de transfert multiniveau et le au moins un convoyeur d'interface.

Le principe général de l'invention consiste donc à remplacer l'élévateur à un seul niveau de la technique connue, par une combinaison de trois éléments :
- un élévateur multiniveau, qui permet d'accroître de façon significative la cadence générale du système automatisé de stockage/déstockage puisqu'à chaque itération d'un cycle de montée/descente de l'élévateur multiniveau, ce dernier peut transporter un groupe de N charges (avec N ≤ Nmax et Nmax une capacité de l'élévateur en nombre de charges) ;
- un dispositif de transfert multiniveau, qui assure une fonction de tampon, permettant de mettre en attente un groupe de N charges, après leur déchargement par l'élévateur (cas d'une sortie de charges) ou avant leur chargement sur l'élévateur (cas d'une entrée de charges) (la capacité dispositif de transfert multiniveau est par exemple égale ou supérieure à celle de l'élévateur multiniveau) ; et
- un séquenceur, qui réalise la fonction de séquencement, permettant de transférer selon un ordre déterminé (c'est-à-dire une séquence souhaitée) des charges depuis le dispositif de transfert multiniveau vers au moins un convoyeur d'interface des sortie (cas d'une sortie de charges) ou depuis au moins un convoyeur d'interface d'entrée vers le dispositif de transfert multiniveau (cas d'une entrée de charges).

Cette combinaison de trois éléments permet donc d'atteindre l'objectif souhaité, à savoir accroître de façon significative la cadence générale du système automatisé de stockage/déstockage, tout en respectant les contraintes de séquencement.

Selon une caractéristique particulière, le au moins un élévateur multiniveau et le au moins un dispositif de transfert multiniveau sont multicharges à chaque niveau.

De cette façon, on augmente encore la cadence générale du système automatisé de stockage/déstockage.

Selon une caractéristique particulière, le au moins un élévateur multiniveau et le au moins un dispositif de transfert multiniveau comprennent deux niveaux et une capacité de deux charges à chaque niveau.

Ainsi, chaque élévateur et chaque dispositif de transfert manipule des groupes de quatre charges (N=4), ce qui présente un bon compromis entre la cadence obtenue et la complexité de ces équipements.

Dans une variante de réalisation, le au moins un dispositif de transfert multiniveau est pourvu de moyens de déplacement vertical et remplace le au moins un séquenceur.

Ainsi, dans cette variante, le dispositif de transfert multiniveau fait office de séquenceur. Cette alternative est donc plus compacte et permet de réduire le matériel nécessaire.

Selon une caractéristique particulière, le au moins un séquenceur comprend un seul niveau.

Ainsi, le séquenceur est simple à réaliser, manipuler et piloter.

Selon une caractéristique particulière, le au moins un ensemble de rangement multiniveau comprend : au moins une étagère multiniveau, dont chaque niveau est subdivisé en emplacements d'accueil d'au moins une charge ; au moins une station tampon multiniveau, dont chaque niveau comprend un convoyeur tampon positionné à une extrémité d'un niveau de la au moins une étagère ; et des moyens de transfert de charges entre les emplacements et les convoyeurs tampons ; et le au moins un élévateur permet un transfert de charges entre le au moins un convoyeur d'interface et la au moins une station tampon.

En d'autres termes, la technique proposée peut être mise en oeuvre dans un contexte où chaque ensemble de rangement multiniveau est d'un type classique, tel que décrit ci-dessus en relation avec les figures 1A, 1B et 1C.

Selon une caractéristique particulière, le système automatisé de stockage/déstockage comprend des premier et deuxième ensembles de rangement multiniveaux comprenant chacun au moins une étagère multiniveau, au moins une station tampon et des moyens de transfert, et le au moins un élévateur est positionné entre les stations tampons des premier et deuxième ensembles de rangement multiniveaux, pour un transfert de charges entre le au moins un convoyeur d'interface et les stations tampons des premier et deuxième ensembles de rangement multiniveaux.

Ainsi, la technique proposée peut être mise en oeuvre dans un contexte où chaque élévateur coopère avec deux ensembles de rangement multiniveaux.

Selon une caractéristique particulière, il y a un écartement identique entre deux niveaux successifs du au moins un dispositif de transfert multiniveau et deux niveaux de deux convoyeurs d'interface superposés verticalement.

Ceci permet de minimiser les déplacements du séquenceur.

Selon une caractéristique particulière, les niveaux du au moins un dispositif de transfert multiniveau sont alignés verticalement avec les niveaux des deux convoyeurs d'interface superposés verticalement.

Ceci permet de minimiser encore les déplacements du séquenceur.

Selon une caractéristique particulière, le système automatisé de stockage/déstockage comprend au moins un convoyeur tampon complémentaire, non compris dans le au moins un ensemble de rangement multiniveau, et le système de pilotage est adapté pour piloter un transfert de charge(s) entre ledit au moins un convoyeur tampon complémentaire et ledit au moins un élévateur, lors d'une itération d'un cycle de montée/descente dudit au moins un élévateur.

Ainsi, le ou les élévateurs peuvent effectuer des mouvements d'entrée ou de sortie de charges dans/hors du ou des convoyeurs tampons complémentaire, ce(s) dernier(s) formant un « rayonnage intermédiaire » utilisé comme tampon pour réguler au besoin le(s) flux de charges.

Dans une première implémentation, le système automatisé de stockage/déstockage comprend au moins un convoyeur d'interface de sortie, un élévateur de sortie, un dispositif de transfert multiniveau de sortie et un séquenceur de sortie, et le système de pilotage est adapté pour piloter :
- un transfert de charges depuis le au moins un ensemble de rangement multiniveau vers l'élévateur de sortie, permettant de prélever un groupe de N charges à chaque itération d'un cycle de montée/descente de l'élévateur de sortie, avec N ≤ Nmax et Nmax une capacité de l'élévateur de sortie en nombre de charges ;
- un transfert, simultanément sur plusieurs niveaux, depuis l'élévateur de sortie vers le dispositif de transfert multiniveau de sortie, de chaque groupe de N charges ; et
- un transfert, via le séquenceur de sortie, depuis le dispositif de transfert multiniveau de sortie vers le au moins un convoyeur d'interface de sortie, de chaque groupe de N charges, sous une contrainte d'ordre de départ des N charges sur ledit au moins un convoyeur d'interface de sortie.

Cette première implémentation permet des sorties de charges hors du système automatisé de stockage/déstockage (fonctionnement en mode « déstockage de charges »).

Diverses caractéristiques particulières de cette première implémentation sont proposées.

Selon une caractéristique particulière, l'élévateur de sortie est multicharge à chaque niveau, et le système de pilotage est adapté pour piloter, pour chaque groupe de N charges, un séquencement des charges placées à chaque niveau de l'élévateur de sortie, ledit séquencement étant cohérent avec ladite contrainte d'ordre de départ des N charges.

Ainsi, le séquencement des charges sur chaque niveau de l'élévateur de sortie (séquencement qui est conservé sur chaque niveau du dispositif de transfert multiniveau de sortie) permet de simplifier la fonction de séquencement réalisée par le séquenceur de sortie (entre le dispositif de transfert multiniveau de sortie et le au moins un convoyeur d'interface de sortie).

Selon une caractéristique particulière, le système automatisé de stockage/déstockage comprend au moins deux convoyeurs d'interface de sortie, associés chacun à un flux de charges distinct, et le système de pilotage est adapté pour piloter, via le séquenceur de sortie, un transfert vers chaque convoyeur d'interface de sortie, de charges appartenant à son flux de charges associé.

Ainsi, la technique proposée est compatible avec un fonctionnement multi-flux de sortie (i.e. plusieurs flux de charges en sortie).

Selon une variante, le dispositif de transfert multiniveau de sortie est pourvu de moyens de déplacement vertical et remplace le séquenceur de sortie, et le système de pilotage est adapté pour piloter un transfert de chaque groupe de N charges directement depuis le dispositif de transfert multiniveau de sortie vers le au moins un convoyeur d'interface de sortie.

Ainsi, dans cette variante, le dispositif de transfert multiniveau de sortie fait office de séquenceur de sortie.

Dans une seconde implémentation (cas des entrées, c'est-à-dire du stockage de charges), le système automatisé de stockage/déstockage comprend au moins un convoyeur d'interface d'entrée, un élévateur d'entrée, un dispositif de transfert multiniveau d'entrée et un séquenceur d'entrée, et le système de pilotage est adapté pour piloter :
- un transfert de charges, via le séquenceur d'entrée, depuis ledit au moins un convoyeur d'interface d'entrée vers le dispositif de transfert multiniveau d'entrée, en formant dans le dispositif de transfert multiniveau d'entrée des groupes de N charges réparties sur plusieurs niveaux, avec N ≤ Nmax et Nmax une capacité de l'élévateur d'entrée en nombre de charges ;
- un transfert, simultanément sur plusieurs niveaux, depuis le dispositif de transfert multiniveau d'entrée vers l'élévateur d'entrée, de chaque groupe de N charges ;
- un transfert de chaque groupe de N charges depuis l'élévateur d'entrée vers le au moins un ensemble de rangement multiniveau, sous une contrainte de dépôt des N charges à chaque itération d'un cycle de montée/descente de l'élévateur d'entrée.

Cette seconde implémentation permet des entrées de charges dans le système automatisé de stockage/déstockage (fonctionnement en mode « stockage de charges »).

Diverses caractéristiques particulières de cette seconde implémentation sont proposées.

Selon une caractéristique particulière, l'élévateur d'entrée est multicharge à chaque niveau, et le système de pilotage est adapté pour piloter, pour chaque groupe de N charges, un séquencement par le séquenceur d'entrée des charges placées à chaque niveau du dispositif de transfert multiniveau d'entrée, ledit séquencement étant cohérent avec ladite contrainte de dépôt des N charges.

Ainsi, le séquencement (réalisé par le séquenceur d'entrée) des charges sur chaque niveau du dispositif de transfert multiniveau d'entrée (séquencement qui est conservé sur chaque niveau de l'élévateur d'entrée) permet de simplifier la réalisation de la contrainte de dépôt des N charges (sur le au moins un ensemble de rangement multiniveau) à chaque itération d'un cycle de montée/descente de l'élévateur d'entrée.

Selon une caractéristique particulière, le système automatisé de stockage/déstockage comprend au moins deux convoyeurs d'interface d'entrée, associés chacun à un flux de charges distinct, et le système de pilotage est adapté pour piloter, via le séquenceur d'entrée, un transfert depuis chaque convoyeur d'interface d'entrée, de charges appartenant à son flux de charges associé.

Ainsi, la technique proposée est compatible avec un fonctionnement multi-flux d'entrée (i.e. plusieurs flux de charges en entrée).

Selon une variante, le dispositif de transfert multiniveau d'entrée est pourvu de moyens de déplacement vertical et remplace le séquenceur d'entrée, et le système de pilotage est adapté pour piloter un transfert de chaque groupe de N charges directement depuis le au moins un convoyeur d'interface d'entrée vers le dispositif de transfert multiniveau d'entrée.

Ainsi, dans cette variante, le dispositif de transfert multiniveau d'entrée fait office de séquenceur d'entrée.

Dans un autre mode de réalisation de l'invention, il est proposé un procédé de déstockage dans un système automatisé de stockage/déstockage tel que précité, comprenant les étapes suivantes :
- transfert de charges depuis le au moins un ensemble de rangement multiniveau vers l'élévateur de sortie, permettant de prélever un groupe de N charges à chaque itération d'un cycle de montée/descente de l'élévateur de sortie, avec N ≤ Nmax et Nmax une capacité de l'élévateur de sortie en nombre de charges ;
- transfert, simultanément sur plusieurs niveaux, depuis l'élévateur de sortie vers le dispositif de transfert multiniveau de sortie, de chaque groupe de N charges ;
- transfert, via le séquenceur de sortie, depuis le dispositif de transfert multiniveau de sortie vers le au moins un convoyeur d'interface de sortie, de chaque groupe de N charges, sous ladite contrainte d'ordre de départ des N charges sur le au moins un convoyeur d'interface de sortie.

Dans un autre mode de réalisation de l'invention, il est proposé un procédé de stockage dans un système automatisé de stockage/déstockage tel que précité, comprenant les étapes suivantes :
- transfert de charges, via le séquenceur d'entrée, depuis ledit au moins un convoyeur d'interface d'entrée vers le dispositif de transfert multiniveau d'entrée, en formant dans le dispositif de transfert multiniveau d'entrée des groupes de N charges réparties sur plusieurs niveaux, avec N ≤ Nmax et Nmax une capacité de l'élévateur d'entrée en nombre de charges ;
- transfert, simultanément sur plusieurs niveaux, depuis le dispositif de transfert multiniveau d'entrée vers l'élévateur d'entrée, de chaque groupe de N charges ;
- transfert de chaque groupe de N charges depuis l'élévateur d'entrée vers le au moins un ensemble de rangement multiniveau, sous ladite contrainte de dépôt des N charges à chaque itération d'un cycle de montée/descente de l'élévateur d'entrée.

Dans un autre mode de réalisation de l'invention, il est proposé un produit programme d'ordinateur qui comprend des instructions de code de programme pour la mise en oeuvre du procédé de déstockage et/ou du procédé de stockage précité(s) (dans l'un quelconque de leurs différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre procédé de déstockage et/ou du procédé de stockage précité(s) (dans l'un quelconque de leurs différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1A, 1B et 1C (vue de côté de la partie gauche, vue de côté de la partie droite et vue de dessus respectivement), déjà décrites en relation avec l'art antérieur, illustrent un exemple de système automatisé de stockage/déstockage selon l'art antérieur ;- les figures 2A, 2B et 2C (vue de côté de la partie gauche, vue de côté de la partie droite et vue de dessus respectivement) illustrent un système automatisé de stockage/déstockage selon un premier mode de réalisation;
- la figure 3 (vue de côté de la partie gauche) illustre un système automatisé de stockage/déstockage selon un deuxième mode de réalisation;
- la figure 4 (vue de côté de la partie gauche) illustre un système automatisé de stockage/déstockage selon un troisième mode de réalisation; et
- la figure 5 présente la structure simplifiée d'un système de pilotage selon un mode de réalisation particulier;
- la figure 6 est un organigramme d'un procédé de déstockage selon un mode de réalisation particulier; et
- la figure 7 est un organigramme d'un procédé de stockage selon un mode de réalisation particulier.

### 6. DESCRIPTION DÉTAILLÉE

Sur toutes les figures du présent document, les éléments identiques sont désignés par une même référence numérique.

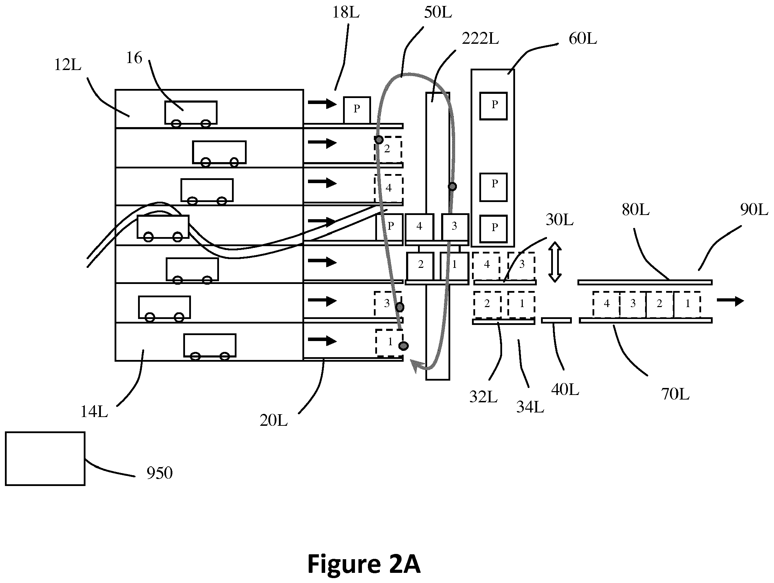

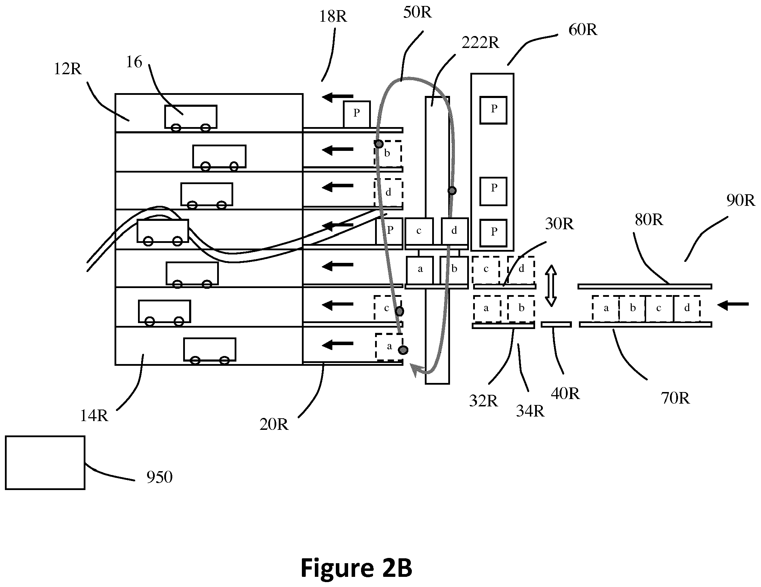

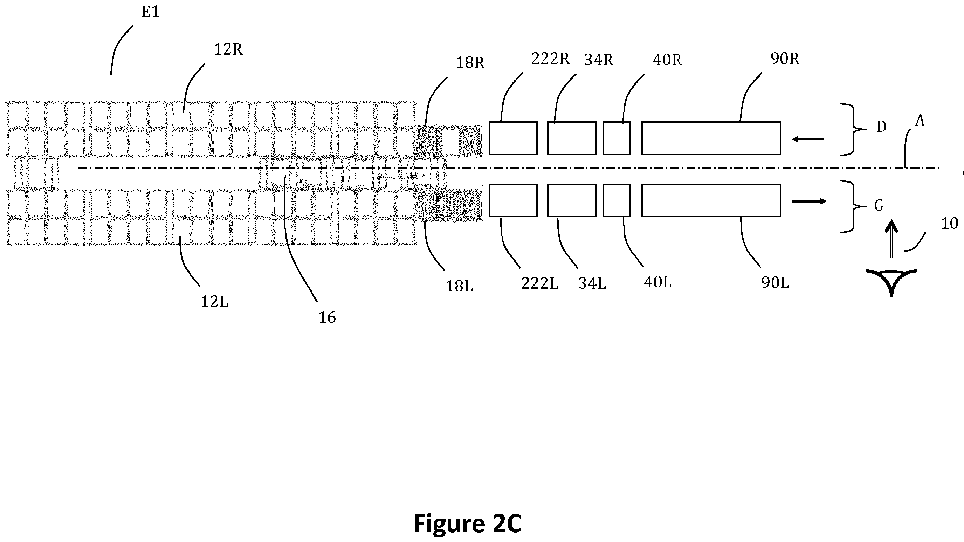

On présente maintenant, en relation avec les **figures 2A****,** **2B** **et** **2C** (vue de côté de la partie gauche, vue de côté de la partie droite et vue de dessus respectivement), un système automatisé de stockage/déstockage selon un premier mode de réalisation.

Ce système se distingue de celui de l'art antérieur, décrit plus haut en relation avec les figures 1A, 1B et 1C, en ce que :• pour la partie gauche, il comprend un élévateur multiniveau de sortie 222L, un dispositif de transfert multiniveau de sortie 34L et un séquenceur de sortie 40L ;• pour la partie droite, il comprend un élévateur multiniveau d'entrée 222R, un dispositif de transfert multiniveau d'entrée 34R et un séquenceur d'entrée 40R.

Par ailleurs, le système de pilotage 950 est modifié par rapport à celui de l'art antérieur et permet de piloter ces éléments distinctifs (222L, 222R, 34L, 34R, 40L, 40R).

On présente maintenant en détail la partie gauche, en relation avec les figures 2A et 2C.

Dans cet exemple, l'élévateur multiniveau de sortie 222L est un « élévateur quatre charges » : deux niveaux superposés avec une capacité de deux charges à chaque niveau. Chaque niveau comprend un convoyeur motorisé et permet de transporter deux charges délivrées par un ou plusieurs des convoyeurs tampons de sortie 20L (de la station tampon de sortie 18L).

L'élévateur multiniveau de sortie 222L s'interface également avec le dispositif de transfert multiniveau de sortie 34L. Ce dernier est apte à recevoir simultanément, sur plusieurs niveaux, un ensemble de charges provenant de l'élévateur multiniveau de sortie 222L. Il est également doté de deux niveaux superposés, et comprend à chaque niveau un convoyeur motorisé 30L ou 32L. Il permet de mettre en attente les quatre charges transportables simultanément par l'élévateur multiniveau de sortie 222L et ceci après leur déchargement de l'élévateur multiniveau de sortie 222L.

Pour réaliser le transfert des charges, les deux niveaux des convoyeurs de l'élévateur multiniveau de sortie 222L sont alignés avec les deux niveaux des convoyeurs 30L et 32L du dispositif de transfert multiniveau de sortie 34L, et l'ensemble des charges est transféré de l'élévateur multiniveau de sortie 222L vers le dispositif de transfert multiniveau de sortie 34L lors de l'immobilisation de l'élévateur multiniveau de sortie 222L.

Le séquenceur de sortie 40L est apte à transférer des charges entre le dispositif de transfert multiniveau de sortie 34L (et donc les convoyeurs 30L et 32L) et les convoyeurs d'interface de sortie 70L et 80L. Le séquenceur de sortie 40L est un dispositif de type table élévatrice avec plateforme, ou tout autre dispositif équivalent qui permet le déplacement vertical d'une charge. Dans cet exemple, le séquenceur de sortie 40L comprend un seul niveau (i.e. une seule plateforme) qui est équipé d'une portion de convoyeur motorisé permettant le déplacement horizontal de la charge.

Les deux convoyeurs d'interface de sortie 70L et 80L sont superposés et permettent l'évacuation des charges vers deux destinations (non représentées) (par exemple d'une part un poste de préparation de commande et d'autre part une autre allée d'étagères multiniveaux).

Dans un mode de réalisation particulier, il y a un écartement identique entre deux niveaux successifs 30L et 32L du dispositif de transfert multiniveau de sortie 34L et entre les niveaux des deux convoyeurs d'interface de sortie 70L et 80L. Les niveaux du dispositif de transfert multiniveau de sortie 34L sont alignés verticalement avec les niveaux des deux convoyeurs d'interface de sortie 70L et 80L. Ainsi, les convoyeurs 30L et 80L sont positionnés l'un en face de l'autre et il en est de même pour les convoyeurs 32L et 70L.

Dans une variante, l'écartement entre les deux convoyeurs d'interface de sortie 70L et 80L est différent de celui entre les deux niveaux successifs 32L et 30L du dispositif de transfert multiniveau de sortie 34L.

Pour la sortie des charges (procédé de déstockage), le fonctionnement du système est le suivant : le système de pilotage 950 pilote un cycle de ramassage 50L de N charges (avec N ≤ 4 dans l'exemple présenté) disponibles aux différents niveaux (i.e. aux différents convoyeurs tampons de sortie 20L) de la station tampon de sortie 18L, afin que l'élévateur multiniveau de sortie 222L ramasse l'ensemble des N charges en une seule rotation (i.e. un seul cycle de montée/descente de l'élévateur multiniveau de sortie 222L) et ceci de façon que le placement de chaque charge sur l'élévateur 22L (en termes de niveau et d'emplacement par niveau) permette, une fois l'ensemble des N charges transférées dans le dispositif de transfert multiniveau de sortie 34L (i.e. dans les convoyeurs 30L et 32L), une reprise la plus optimale possible pour la reconstitution, grâce au séquenceur de sortie 40L, de la séquence (l'ordre) voulue sur les convoyeurs d'interface de sortie 70L et 80L.

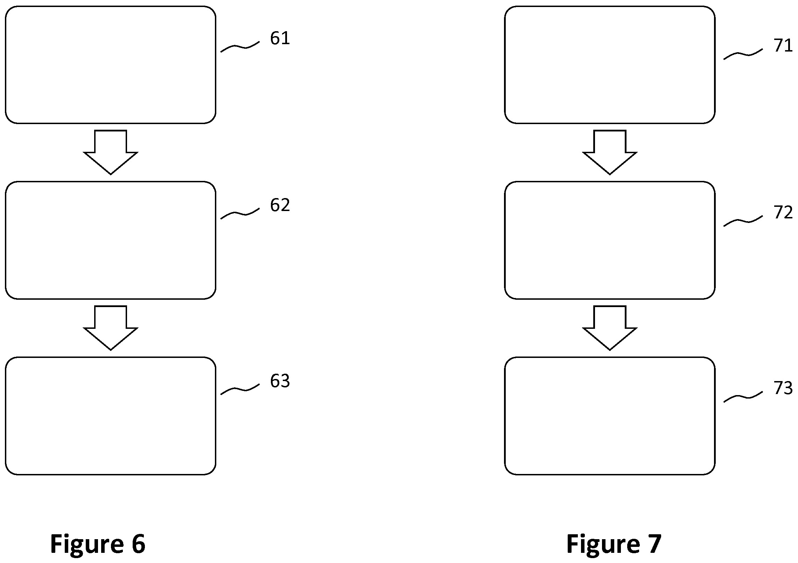

En d'autres termes, et comme illustré sur la **figure 6**, le système de pilotage 950 est adapté pour piloter :
- étape 61 : un transfert de charges depuis les convoyeurs tampons de sortie 20L vers l'élévateur de sortie 222L, permettant de prélever un groupe de N charges à chaque itération du cycle de montée/descente de l'élévateur de sortie (avec N ≤ 4 dans l'exemple présenté). Pour chaque groupe de N charges, le séquencement des charges placées à chaque niveau de l'élévateur de sortie est cohérent avec la contrainte définie ci-après (contrainte d'ordre de départ des N charges) ;
- étape 62 : un transfert, simultanément sur deux niveaux, depuis l'élévateur de sortie 222L vers le dispositif de transfert multiniveau de sortie 34L, de chaque groupe de N charges ; et
- étape 63 : un transfert, via le séquenceur de sortie 40L, depuis le dispositif de transfert multiniveau de sortie 34L vers au moins un des convoyeurs d'interface de sortie 70L et 80L, de chaque groupe de N charges, sous une contrainte d'ordre de départ des N charges sur ce(s) convoyeur(s) d'interface de sortie 70L et 80L.

Si le système gère plusieurs flux de charges en sortie, le système de pilotage est adapté pour piloter, via le séquenceur de sortie 40L, un transfert vers chacun des deux convoyeurs d'interface de sortie 70L et 80L, les charges du flux qui lui est associé.

Ainsi dans l'exemple proposé sur la figure 2A, pour ramasser les charges 1, 2, 3 et 4 sur les différents convoyeurs tampons de sortie 20L des différents niveaux de la station tampon de sortie 18L, et pour les mettre à disposition sur le convoyeur d'interface de sortie 70L dans la séquence voulue correspondant à l'ordre « 1, 2, 3 et 4 », le système de pilotage 950 va :
- piloter un cycle de ramassage 50L dans un sens horaire afin de ramasser la charge 1 et la placer sur le premier niveau de l'élévateur 222L en position droite, puis ramasser la charge 3 et la placer sur le deuxième niveau de l'élévateur en position droite, puis ramasser la charge 2 et la placer sur le premier niveau de l'élévateur en position gauche, et enfin ramasser la charge 4 et la placer sur le deuxième niveau de l'élévateur en position gauche ;
- piloter le transfert de l'ensemble des charges de l'élévateur 222L vers le dispositif de transfert 34L (comprenant les convoyeurs 30L et 32L) ;
- piloter le transfert, via le séquenceur 40L, des deux premiers contenants dans la séquence, à savoir les contenants 1 et 2, du convoyeur 32L vers le convoyeur d'interface de sortie 70L, puis le transfert, via le séquenceur 40L, des deux derniers contenants dans la séquence, à savoir les contenants 3 et 4, du convoyeur 32L vers le convoyeur d'interface de sortie 70L.

On présente maintenant en détail la partie droite, en relation avec les figures 2B et2C.

Dans cet exemple, l'élévateur multiniveau d'entrée 222R est un « élévateur quatre charges » : deux niveaux superposés avec une capacité de deux charges à chaque niveau. Chaque niveau comprend un convoyeur motorisé et permet de transporter deux charges délivrées par un ou plusieurs des convoyeurs tampons d'entrée 20R (de la station tampon d'entrée 18R).

L'élévateur multiniveau d'entrée 222R s'interface également avec le dispositif de transfert multiniveau d'entrée 34R. L'élévateur multiniveau d'entrée 222R est apte à recevoir simultanément, sur plusieurs niveaux, un ensemble de charges provenant du dispositif de transfert multiniveau d'entrée 34R. Ce dernier est également doté de deux niveaux superposés, et comprend à chaque niveau un convoyeur motorisé 30R ou 32R. Il permet de mettre en attente les quatre charges transportables simultanément par l'élévateur multiniveau d'entrée 222R et ceci avant leur déchargement sur l'élévateur multiniveau d'entrée 222R.

Pour réaliser le transfert des charges, les deux niveaux des convoyeurs de l'élévateur multiniveau d'entrée 222R sont alignés avec les deux niveaux des convoyeurs 30R et 32R du dispositif de transfert multiniveau d'entrée 34R, et l'ensemble des charges est transféré du dispositif de transfert multiniveau d'entrée 34R vers l'élévateur multiniveau d'entrée 222R lors de l'immobilisation de l'élévateur multiniveau d'entrée 222R.

Le séquenceur d'entrée 40R est apte à transférer des charges depuis les convoyeurs d'interface d'entrée 70R et 80R vers le dispositif de transfert multiniveau d'entrée 34R (et donc les convoyeurs 30R et 32R). Le séquenceur d'entrée 40R est un dispositif de type table élévatrice avec plateforme, ou tout autre dispositif équivalent qui permet le déplacement vertical d'une charge. Dans cet exemple, le séquenceur d'entrée 40R comprend un seul niveau (i.e. une seule plateforme) qui est équipé d'une portion de convoyeur motorisé permettant le déplacement horizontal de la charge.

Les deux convoyeurs d'interface d'entrée 70R et 80R sont superposés et permettent l'arrivée des charges venant de deux sources (non représentées) (par exemple d'une part un poste de réapprovisionnement et d'autre part une autre allée d'étagères multini veaux).

Dans un mode de réalisation particulier, il y a un écartement identique entre deux niveaux successifs 30R et 32R du dispositif de transfert multiniveau d'entrée 34R et entre les niveaux des deux convoyeurs d'interface d'entrée 70R et 80R. Les niveaux du dispositif de transfert multiniveau d'entrée 34R sont alignés verticalement avec les niveaux des deux convoyeurs d'interface d'entrée 70R et 80R. Ainsi, les convoyeurs 30R et 80R sont positionnés l'un en face de l'autre et il en est de même pour les convoyeurs 32R et 70R.

Dans une variante, l'écartement entre les deux convoyeurs d'interface d'entrée 70R et 80R est différent de celui entre les deux niveaux successifs 32R et 30R du dispositif de transfert multiniveau d'entrée 34R.

Pour l'entrée des charges (procédé de stockage), le fonctionnement du système est le suivant : le système de pilotage 950 pilote un cycle de transfert, via le séquenceur d'entrée 40R, de N charges (avec N ≤ 4 dans l'exemple présenté) depuis les convoyeurs d'interface d'entrée 70R et 80R vers le dispositif de transfert multiniveau d'entrée 34R (i.e. les convoyeurs 30R et 32R), de façon que le placement des N charges une fois transférées du dispositif de transfert multiniveau d'entrée 34R sur l'élévateur multiniveau d'entrée 222R permette à l'élévateur multiniveau d'entrée 222R de déposer chacune des N charges dans un des convoyeurs tampons d'entrée 20R de la station tampon d'entrée 18R, en une seule rotation (i.e. un seul cycle de montée/descente de l'élévateur multiniveau d'entrée 222R).

En d'autres termes, et comme illustré sur la **figure 7**, le système de pilotage 950 est adapté pour piloter :
- étape 71 : un transfert de charges, via le séquenceur d'entrée 40R, depuis au moins un des convoyeurs d'interface d'entrée 70R et 80R vers le dispositif de transfert multiniveau d'entrée 34R, en formant dans le dispositif de transfert multiniveau d'entrée 34R des groupes de N charges réparties sur plusieurs niveaux (avec N ≤ 4 dans l'exemple présenté). Pour chaque groupe de N charges, le séquencement (par le séquenceur d'entrée 40R) des charges placées à chaque niveau du dispositif de transfert multiniveau d'entrée 34Rest cohérent avec la contrainte définie ci-après (contrainte de dépôt des N charges sur les convoyeurs tampons d'entrée 20R) ;
- étape 72 : un transfert, simultanément sur plusieurs niveaux, depuis le dispositif de transfert multiniveau d'entrée 34R vers l'élévateur d'entrée 222R, de chaque groupe de N charges ;
- étape 73 : un transfert de chaque groupe de N charges depuis l'élévateur d'entrée 222R vers les convoyeurs tampons d'entrée 20R de la station tampon d'entrée 18R, sous une contrainte de dépôt des N charges à chaque itération d'un cycle de montée/descente de l'élévateur d'entrée.

Si le système gère plusieurs flux de charges en entrée (chacun associé et reçu sur l'un des convoyeurs d'interface d'entrée 70R et 80R), le système de pilotage est adapté pour piloter, via le séquenceur d'entrée 40R, un transfert depuis chacun des deux convoyeurs d'interface d'entrée 70R et 80R, de charges appartenant à son flux de charges associé.

Ainsi dans l'exemple proposé sur la figure 2B, pour prendre les charges a, b, c et d sur le convoyeur d'interface d'entrée 70R et les déposer sur les différents convoyeurs tampons d'entrée 20R des différents niveaux de la station tampon d'entrée 18R, le système de pilotage 950 va :
- pilote un cycle de transfert, via le séquenceur d'entrée 40R, afin de prendre la charge a et la placer sur le premier niveau (convoyeur 32R) du dispositif de transfert multiniveau d'entrée 34R en position gauche, puis prendre la charge b et la placer sur le premier niveau (convoyeur 32R) du dispositif de transfert multiniveau d'entrée 34R en position droite, prendre la charge c et la placer sur le second niveau (convoyeur 30R) du dispositif de transfert multiniveau d'entrée 34R en position gauche, et enfin prendre la charge d et la placer sur le second niveau (convoyeur 30R) du dispositif de transfert multiniveau d'entrée 34R en position droite ;• piloter le transfert de l'ensemble des charges du dispositif de transfert multiniveau d'entrée 34R (comprenant les convoyeurs 30R et 32R) vers l'élévateur 222R ;• piloter un cycle de dépose 50R dans un sens horaire afin de déposer les charges sur les convoyeurs tampons d'entrée 20R de la station tampon d'entrée 18R.

Dans un mode de réalisation particulier, illustré sur la figure 2A, un rayonnage intermédiaire 60L peut être disposé en vis-à-vis de la station tampon de sortie 18L, sur tout ou partie de la hauteur de l'étagère 18L (au-dessus du dispositif de transfert multiniveau de sortie 34L, dans l'exemple de la figure 2A), et ceci de façon que l'élévateur de sortie 222L, positionné entre la station tampon de sortie 18L et ce rayonnage intermédiaire 60L, soit également en mesure d'effectuer des mouvements d'entrée ou de sortie de charges dans ce rayonnage intermédiaire. Ce rayonnage intermédiaire comprend un ou plusieurs convoyeurs tampons complémentaires. Il est utilisé comme tampon pour réguler au besoin les flux de charges en sortie.

De même, comme illustré sur la figure 2B, un rayonnage intermédiaire 60R peut être disposé en vis-à-vis de la station tampon d'entrée 18R, sur tout ou partie de la hauteur de l'étagère 18R (au-dessus du dispositif de transfert multiniveau d'entrée 34R, dans l'exemple de la figure 2B), et ceci de façon que l'élévateur d'entrée 222R, positionné entre la station tampon d'entrée 18R et ce rayonnage intermédiaire 60R, soit également en mesure d'effectuer des mouvements d'entrée ou de sortie de charges dans ce rayonnage intermédiaire.

La **figure 3** (vue de côté de la partie gauche) illustre un système automatisé de stockage/ déstockage selon un deuxième mode de réalisation, dans lequel le dispositif de transfert multiniveau de sortie (référencé 34L' et comprenant les convoyeurs 30L et 32L) fait office de séquenceur de sortie, c'est-à-dire remplace le séquenceur de sortie référencé 40L sur la figure 2A.

Pour assurer cette fonction supplémentaire, le dispositif de transfert multiniveau de sortie 34L' est équipée de moyens de type élévateur alternatif avec plateforme, ou de tout autre moyen équivalent permettant le déplacement vertical des charges entre deux ou plusieurs niveaux.

Ainsi pour décharger les charges selon la séquence « 1, 2, 3 et 4 », le convoyeur 32 L s'aligne horizontalement avec le convoyeur d'interface de sortie 70L. Une fois les contenants 1 et 2 déchargés, le dispositif de transfert multiniveau de sortie 34L' effectue un déplacement vertical afin que le convoyeur 30L s'aligne horizontalement avec le convoyeur d'interface de sortie 70L. Les contenants 3 et 4 sont alors déchargés à la suite des contenants 1 et 2 sur le convoyeur d'interface de sortie 70L, respectant ainsi la séquence.

De même, le dispositif de transfert multiniveau d'entrée 34R (comprenant les convoyeurs 30R et 32R) peut être modifié pour faire office de séquenceur d'entrée, c'est-à-dire remplacer le séquenceur d'entrée référencé 40R sur la figure 2B.

La **figure 4** (vue de côté de la partie gauche) illustre un système automatisé de stockage/déstockage selon un troisième mode de réalisation.

Le système comprend un second ensemble de rangement E2 (du même type que le premier E1) comprenant deux étagères multiniveaux (seule celle référencée 112L est visible sur la figure 4), des stations tampons de sortie et d'entrée (seule la station tampon de sortie 118L est visible sur la figure 4).

La station tampon de sortie 118L est positionnée à une extrémité de l'étagère 112L, et est adjacente à celle-ci. Elle est constituée d'un ensemble de convoyeurs tampons de sortie 120L. Le nombre de convoyeurs tampons de sortie 120L est le même que celui de niveaux dans l'étagère 112L.

L'élévateur multiniveau de sortie 222L est positionné entre les stations tampons de sortie 18L et 118L, pour un transfert de charges entre celles-ci et les convoyeurs d'interface de sortie 70L et 80L, via le dispositif de transfert multiniveau de sortie 34L et le séquenceur de sortie 40L.

Dans ce troisième mode de réalisation, lors du même cycle de ramassage 50L, l'élévateur multiniveau de sortie 222L peut ramasser des charges sur les deux stations tampons de sortie 18L et 118L, afin de pré-constituer la séquence demandée. Ainsi dans l'exemple proposé sur la figure 4, l'élévateur multiniveau de sortie 222L ramasse les charges 1, 2 et 4 sur les convoyeurs tampons de sortie 20L de la station tampon de sortie 18L, et la charge 3 sur l'un des convoyeurs tampons de sortie 120L de la station tampon de sortie 118L. Il les ramasse dans l'ordre suivant : 1, 2, 3 et 4.

De la même manière (non illustrée), l'élévateur multiniveau d'entrée 222R peut déposer des charges sur les deux stations tampons d'entrée des deux ensembles de rangement.

Dans un autre de mode de réalisation particulier, les convoyeurs compris dans les équipements de la partie gauche du système (c'est-à-dire, cf. figure 2A, les convoyeurs tampons de sortie 20L, les convoyeurs des différents niveaux de l'élévateur multiniveau de sortie 222L, les convoyeurs des différents niveaux du dispositif de transfert multiniveau de sortie 34L (comprenant les convoyeurs 30L et 32L) et le convoyeur de l'unique niveau du séquenceur de sortie 40L) peuvent être utilisés :
- soit dans un sens, ce qui permet un fonctionnement de la partie gauche du système en sortie de charges, comme décrit plus haut, en relation avec la figure 2A;
- soit dans l'autre sens, ce qui permet un fonctionnement de la partie gauche du système en entrée de charges (fonctionnement identique à celui décrit plus haut pour la partie droite du système, en relation avec la figure 2B). Ce mode permet de palier à un dysfonctionnement de la partie droite du système (par exemple l'élévateur d'entrée).

De même, les convoyeurs compris dans les équipements de la partie droite du système (c'est-à-dire, cf. figure 2B, les convoyeurs tampons d'entrée 20R, les convoyeurs des différents niveaux de l'élévateur multiniveau d'entrée 222R, les convoyeurs des différents niveaux du dispositif de transfert multiniveau d'entrée 34R (comprenant les convoyeurs 30R et 32R) et le convoyeur de l'unique niveau du séquenceur d'entrée 40R) peuvent être utilisés :
- soit dans un sens, ce qui permet un fonctionnement de la partie droite du système en entrée de charges, comme décrit plus haut, en relation avec la figure 2B ;• soit dans l'autre sens, ce qui permet un fonctionnement de la partie droite du système en sortie de charges (fonctionnement identique à celui décrit plus haut pour la partie gauche du système, en relation avec la figure 2A). Ce mode permet de palier à un dysfonctionnement de la partie gauche du système (par exemple l'élévateur de sortie).

La **figure 5** présente la structure simplifiée d'un système de pilotage 950 selon un mode de réalisation particulier, mettant en oeuvre le procédé de déstockage et/ou le procédé de stockage décrit(s) plus haut, en relation avec les figures 2A, 2B, 2C, 3, 4, 6 et 7.

Le système de pilotage 950 comprend une mémoire vive 93 (par exemple une mémoire RAM), une unité de traitement 91, équipée par exemple d'un processeur, et pilotée par un programme d'ordinateur stocké dans une mémoire morte 92 (par exemple une mémoire ROM ou un disque dur). A l'initialisation, les instructions de code du programme d'ordinateur sont par exemple chargées dans la mémoire vive 93 avant d'être exécutées par le processeur de l'unité de traitement 91. L'unité de traitement 91 génère en sortie, selon les instructions du programme, des commandes 94 de pilotage des différents équipements du système (notamment, pour la partie gauche par exemple, les convoyeurs tampons de sortie 20L, l'élévateur multiniveau de sortie 222L, le dispositif de transfert multiniveau de sortie 34L (comprenant les convoyeurs 30L et 32L) et le séquenceur de sortie 40L).

Cette figure 6 illustre seulement une manière particulière, parmi plusieurs possibles, de réaliser les différents procédés précités (cf. figures 6 et 7). En effet, la technique de l'invention se réalise indifféremment :• sur une machine de calcul reprogrammable (un ordinateur PC, un processeur DSP ou un microcontrôleur) exécutant un programme comprenant une séquence d'instructions, ou• sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de déstockage de charges depuis un système automatisé de stockage/déstockage comprenant :
• un système de pilotage (950) ;
• au moins un ensemble de rangement (E1) comprenant plusieurs niveaux sur lesquels des charges peuvent être prélevées ou déposées par des navettes ;
• au moins un convoyeur d'interface de sortie (70L, 80L) pour des sorties de charges hors du système ;
• un élévateur de sortie (222L) comprenant K niveaux multicharges, avec K ≥ 2, et présentant un cycle de montée/descente ;
• un dispositif de transfert de sortie (34L) comprenant K niveaux multicharges ; et
• un séquenceur de sortie (40L) pourvu de moyens de déplacement vertical,
ledit procédé comprenant les étapes suivantes :
- lors d'une itération dudit cycle de montée/descente, transfert (61) d'un groupe de N charges, depuis le au moins un ensemble de rangement multiniveau vers les K niveaux multicharges de l'élévateur de sortie, avec N inférieur ou égal à une capacité de l'élévateur de sortie en nombre de charges, et avec, pour chaque niveau multicharge de l'élévateur de sortie, un séquencement de charges, piloté par le système de pilotage, cohérent avec une contrainte d'ordre de départ des N charges sur ledit au moins un convoyeur d'interface de sortie ;
- transfert (62), simultanément sur les K niveaux, dudit groupe de N charges depuis l'élévateur de sortie vers le dispositif de transfert de sortie ; et
- transfert (63) dudit groupe de N charges, via le séquenceur de sortie, depuis le dispositif de transfert de sortie vers le au moins un convoyeur d'interface de sortie, en respectant ladite contrainte d'ordre de départ des N charges sur ledit au moins un convoyeur d'interface de sortie.

2. Procédé de déstockage de charges depuis un système automatisé de stockage/déstockage comprenant :
• un système de pilotage (950) ;
• au moins un ensemble de rangement (E1) comprenant plusieurs niveaux sur lesquels des charges peuvent être prélevées ou déposées par des navettes ;
• au moins un convoyeur d'interface de sortie (70L, 80L) pour des sorties de charges hors du système ;
• un élévateur de sortie (222L) comprenant K niveaux multicharges, avec K ≥ 2, et présentant un cycle de montée/descente ;
• un dispositif de transfert de sortie (34L') comprenant K niveaux multicharges et pourvu de moyens de déplacement vertical ; et
ledit procédé comprenant les étapes suivantes :
- lors d'une itération dudit cycle de montée/descente, transfert (61) d'un groupe de N charges, depuis le au moins un ensemble de rangement multiniveau vers les K niveaux multicharges de l'élévateur de sortie, avec N inférieur ou égal à une capacité de l'élévateur de sortie en nombre de charges, et avec, pour chaque niveau multicharge de l'élévateur de sortie, un séquencement de charges, piloté par le système de pilotage, cohérent avec une contrainte d'ordre de départ des N charges sur ledit au moins un convoyeur d'interface de sortie ;
- transfert (62), simultanément sur les K niveaux, dudit groupe de N charges depuis l'élévateur de sortie vers le dispositif de transfert de sortie ; et
- transfert (63) dudit groupe de N charges, depuis le dispositif de transfert de sortie vers le au moins un convoyeur d'interface de sortie, en respectant ladite contrainte d'ordre de départ des N charges sur ledit au moins un convoyeur d'interface de sortie.

3. Procédé de stockage de charges dans un système automatisé de stockage/déstockage comprenant :
• un système de pilotage (950) ;
• au moins un ensemble de rangement (E1) comprenant plusieurs niveaux sur lesquels des charges peuvent être prélevées ou déposées par des navettes;
• au moins un convoyeur d'interface d'entrée (70R, 80R) pour des entrées de charges dans le système ;
• un élévateur d'entrée (222R) comprenant K niveaux multicharges, avec K ≥ 2, et présentant un cycle de montée/descente ;
• un dispositif de transfert d'entrée (34R) comprenant K niveaux multicharges ; et
• un séquenceur d'entrée (40R) pourvu de moyens de déplacement vertical,
ledit procédé comprenant les étapes suivantes :
- transfert (71) de charges, via le séquenceur d'entrée, depuis ledit au moins un convoyeur d'interface d'entrée vers le dispositif de transfert d'entrée, en formant dans le dispositif de transfert d'entrée un groupe de N charges réparties sur les K niveaux multicharges, avec N inférieur ou égal à une capacité de l'élévateur d'entrée en nombre de charges, et avec, pour chaque niveau multicharge du dispositif de transfert d'entrée, un séquencement de charges, piloté par le système de pilotage, cohérent avec une contrainte de dépôt des N charges dans le au moins un ensemble de rangement multiniveau lors d'une itération dudit cycle de montée/descente ;
- transfert (72), simultanément sur les K niveaux, dudit groupe de N charges depuis le dispositif de transfert d'entrée vers l'élévateur d'entrée ; et
- lors d'une itération dudit cycle de montée/descente, transfert (72) dudit groupe de N charges, depuis l'élévateur d'entrée vers le au moins un ensemble de rangement multiniveau, en respectant ladite contrainte de dépôt des N charges.

4. Procédé de stockage de charges dans un système automatisé de stockage/déstockage comprenant :
• un système de pilotage (950) ;
• au moins un ensemble de rangement (E1) comprenant plusieurs niveaux sur lesquels des charges peuvent être prélevées ou déposées par des navettes ;
• au moins un convoyeur d'interface d'entrée (70R, 80R) pour des entrées de charges dans le système ;
• un élévateur d'entrée (222R) comprenant K niveaux multicharges, avec K ≥ 2, et présentant un cycle de montée/descente ;
• un dispositif de transfert d'entrée (34R) comprenant K niveaux multicharges et pourvu de moyens de déplacement vertical ; et
ledit procédé comprenant les étapes suivantes :
- transfert (71) de charges, via le séquenceur d'entrée, depuis ledit au moins un convoyeur d'interface d'entrée vers le dispositif de transfert d'entrée, en formant dans le dispositif de transfert d'entrée un groupe de N charges réparties sur les K niveaux multicharges, avec N inférieur ou égal à une capacité de l'élévateur d'entrée en nombre de charges, et avec, pour chaque niveau multicharge du dispositif de transfert d'entrée, un séquencement de charges, piloté par le système de pilotage, cohérent avec une contrainte de dépôt des N charges dans le au moins un ensemble de rangement multiniveau lors d'une itération dudit cycle de montée/descente ;
- transfert (72), simultanément sur les K niveaux, dudit groupe de N charges depuis le dispositif de transfert d'entrée vers l'élévateur d'entrée ; et
- lors d'une itération dudit cycle de montée/descente, transfert (72) dudit groupe de N charges, depuis l'élévateur d'entrée vers le au moins un ensemble de rangement multiniveau, en respectant ladite contrainte de dépôt des N charges.

## Patentansprüche

1. Verfahren zum Auslagern von Lasten aus einem automatisierten System zum Ein-/Auslagern, umfassend:
• ein Steuerungssystem (950);
• mindestens eine Ablageeinheit (E1), welche mehrere Ebenen umfasst, auf welchen Lasten von Transportfahrzeugen entnommen und abgelegt werden können;
• mindestens einen Ausgangsverbindungsförderer (70L, 80L) für Lastenausgänge aus dem System;
• einen Ausgangshubstapler (222L), welcher K Multilastebenen, mit K ≥ 2, umfasst und einen Steig/Sink-Zyklus aufweist;
• eine Ausgangsüberführungsvorrichtung (34L), welche K Multilastebenen umfasst; und
• eine Ausgangsablaufsteuerungseinheit (40L), welche mit Mitteln zur vertikalen Verlagerung vorgesehen ist, wobei das Verfahren die folgenden Schritte umfasst:
- Überführen (61) einer Gruppe von N Lasten aus der mindestens einen Ablageeinheit von mehreren Ebenen in Richtung auf die K Multilastebenen des Ausgangshubstaplers bei einem Durchlauf des Steig/Sink-Zyklus, mit N kleiner oder gleich einer Kapazität des Ausgangshubstaplers an Anzahl von Lasten, und mit einer Ablaufsteuerung von Lasten für jede Multilastebene des Ausgangshubstaplers, welche von dem Steuerungssystem gesteuert wird, welche mit einer Abgangsanforderungsanweisung von N Lasten auf dem mindestens einen Ausgangsverbindungsförderer kohärent ist;
- gleichzeitiges Überführen (62) der Gruppe von N Lasten aus dem Ausgangshubstapler in Richtung auf die Ausgangsüberführungsvorrichtung auf den K Ebenen; und
- Überführen (63) der Gruppe von N Lasten über die Ausgangsablaufsteuerungseinheit von der Ausgangsüberführungsvorrichtung in Richtung auf den mindestens einen Ausgangsverbindungsförderer unter Beachtung der Abgangsanforderungsanweisung der N Lasten auf dem mindestens einen Ausgangsverbindungsförderer.

2. Verfahren zum Auslagern von Lasten aus einem automatisierten System zum Ein-/Auslagern, umfassend:
• ein Steuerungssystem (950);
• mindestens eine Ablageeinheit (E1), welche mehrere Ebenen aufweist, auf welchen Lasten von Transportfahrzeugen entnommen und abgelegt werden können;
• mindestens einen Ausgangsverbindungsförderer (70L, 80L) für Lastenausgänge aus dem System;
• einen Ausgangshubstapler (222L), welcher K Multilastebenen, mit K ≥ 2, umfasst und einen Steig/Sink-Zyklus aufweist;
• eine Ausgangsüberführungsvorrichtung (34L'), welche K Multilastebenen umfasst und mit Mitteln zur vertikalen Verlagerung vorgesehen ist; und
wobei das Verfahren die folgenden Schritte umfasst:
- Überführen (61) einer Gruppe von N Lasten aus der mindestens einen Ablageeinheit von mehreren Ebenen in Richtung auf die K Multilastebenen des Ausgangshubstaplers bei einem Durchlauf des Steig/Sink-Zyklus, mit N kleiner oder gleich einer Kapazität des Ausgangshubstaplers an Anzahl von Lasten, und mit einer Ablaufsteuerung von Lasten für jede Multilastebene des Ausgangshubstaplers, welche von dem Steuerungssystem gesteuert wird, welche mit einer Abgangsanforderungsanweisung von N Lasten auf dem mindestens einen Ausgangsverbindungsförderer kohärent ist;
- gleichzeitiges Überführen (62) der Gruppe von N Lasten aus dem Ausgangshubstapler in Richtung auf die Ausgangsüberführungsvorrichtung auf den K Ebenen; und
- Überführen (63) der Gruppe von N Lasten von der Ausgangsüberführungsvorrichtung in Richtung auf den mindestens einen Ausgangsverbindungsförderer unter Beachtung der Abgangsanforderungsanweisung der N Lasten auf dem mindestens einen Ausgangsverbindungsförderer.

3. Verfahren zum Einlagern von Lasten in einem automatisierten System zum Ein-/Auslagern, umfassend:
• ein Steuerungssystem (950);
• mindestens eine Ablageeinheit (E1), welche mehrere Ebenen aufweist, auf welchen Lasten von Transportfahrzeugen entnommen und abgelegt werden können;
• mindestens einen Eingangsverbindungsförderer (70R, 80R) für Lasteneingänge in das System;
• einen Eingangshubstapler (222R), welcher K Multilastebenen, mit K ≥ 2, umfasst und einen Steig/Sink-Zyklus aufweist;
• eine Eingangsüberführungsvorrichtung (34R), welche K Multilastebenen umfasst; und
• eine Eingangsablaufsteuerungseinheit (40R), welche mit Mitteln zur vertikalen Verlagerung vorgesehen ist, wobei das Verfahren die folgenden Schritte umfasst:
- Überführen (71) von Lasten über die Eingangsablaufsteuerungseinheit von dem mindestens einen Eingangsverbindungsförderer in Richtung auf die Eingangsüberführungsvorrichtung unter Bildung einer Gruppe von N Lasten in der Eingangsüberführungsvorrichtung, welche über die K Multilastebenen verteilt sind, mit N kleiner oder gleich einer Kapazität des Eingangshubstaplers an Anzahl von Lasten, und mit einer Ablaufsteuerung von Lasten für jede Multilastebene der Eingangsüberführungsvorrichtung, welche von dem Steuerungssystem gesteuert wird, welche mit einer Ablageanforderungsanweisung von N Lasten in der mindestens einen Ablageeinheit mit mehreren Ebenen kohärent ist, bei einem Durchlauf des Steig/Sink-Zyklus
- gleichzeitiges Überführen (72) der Gruppe von N Lasten aus der Eingangsüberführungsvorrichtung in Richtung auf den Eingangshubstapler auf den K Ebenen; und
- Überführen (72) der Gruppe von N Lasten aus dem Eingangshubstapler in Richtung auf die mindestens eine Ablageeinheit von mehreren Ebenen unter Beachtung der Ablageanforderungsanweisung der N Lasten bei einem Durchlauf der Steig/Sink-Zyklus.

4. Verfahren zum Einlagern von Lasten in einem automatisierten System zum Ein-/Auslagern, umfassend:
• ein Steuerungssystem (950);
• mindestens eine Ablageeinheit (E1), welche mehrere Ebenen aufweist, auf welchen Lasten von Transportfahrzeugen entnommen und abgelegt werden können;
• mindestens einen Eingangsverbindungsförderer (70R, 80R) für Lasteneingänge in das System;
• einen Eingangshubstapler (222R), welcher K Multilastebenen, mit K ≥ 2, umfasst und einen Steig/Sink-Zyklus aufweist;
• eine Eingangsüberführungsvorrichtung (34R), welche K Multilastebenen umfasst und mit Mitteln zur vertikalen Verlagerung vorgesehen ist; und
wobei das Verfahren die folgenden Schritte umfasst:
- Überführen (71) von Lasten über die Eingangsablaufsteuerungseinheit von dem mindestens einen Eingangsverbindungsförderer in Richtung auf die Eingangsüberführungsvorrichtung unter Bildung einer Gruppe von N Lasten in der Eingangsüberführungsvorrichtung, welche über die K Multilastebenen verteilt sind, mit N kleiner oder gleich einer Kapazität des Eingangshubstaplers an Anzahl von Lasten, und mit einer Ablaufsteuerung von Lasten für jede Multilastebene der Eingangsüberführungsvorrichtung, welche von dem Steuerungssystem gesteuert wird, welche mit einer Ablageanforderungsanweisung von N Lasten in der mindestens einen Ablageeinheit mit mehreren Ebenen kohärent ist, bei einem Durchlauf des Steig/Sink-Zyklus
- gleichzeitiges Überführen (72) der Gruppe von N Lasten aus der Eingangsüberführungsvorrichtung in Richtung auf den Eingangshubstapler auf den K Ebenen; und
- Überführen (72) der Gruppe von N Lasten aus dem Eingangshubstapler in Richtung auf die mindestens eine Ablageeinheit von mehreren Ebenen unter Beachtung der Ablageanforderungsanweisung der N Lasten bei einem Durchlauf der Steig/Sink-Zyklus.

## Claims

1. Method for picking loads from an automated storage/picking system comprising:
• a steering system (950);
• at least one storage set (E1) comprising several levels, whereon loads can be removed or deposited by shuttles;
• at least one exit interface conveyor (70L, 80L) for loads exiting outside of the system;
• an exit lift (222L) comprising K multiload levels, with K≥2, and presenting a climb/descent cycle;
• an exit transfer device (34L) comprising K multiload levels; and
• an exit sequencer (40L) provided with means of vertical displacement, the said method comprising the following steps:
- at the time of an iteration of the said climb/descent cycle, transfer (61) of a group of N loads, from the at least one multilevel storage set to the K multiload levels of the exit lift, with N less than or equal to a capacity of the exit lift in number of loads, and with, for each multiload level of the exit lift, a sequencing of loads, steered by the steering system, consistent with starting order limitation of N loads on said at least one exit interface conveyor;
- transfer (62), simultaneously on the K levels, of the said group of N loads from the exit lift to the exit transfer device; and
- transfer (63) of the said group of N loads, via the exit sequencer, from the exit transfer device to the at least one exit interface conveyor, adhering to said starting order limitation of N loads on said at least one exit interface conveyor.

2. Method of picking loads from an automated storage/picking system comprising:
• a steering system (950);
• at least one storage set (E1) comprising several levels, whereon loads can be removed or deposited by shuttles;
• at least one exit interface conveyor (70L, 80L) for loads exiting outside of the system;
• an exit lift (222L) comprising K multiload levels, with K≥2, and presenting a climb/descent cycle;
• an exit transfer device (34L') comprising K multiload levels and provided with means of vertical displacement; and
the said method comprising the following steps:
- at the time of an iteration of the said climb/descent cycle, transfer (61) of a group of N loads, from the at least one multilevel storage set to the K multiload levels of the exit lift, with N less than or equal to a capacity of the exit lift in number of loads, and with, for each multiload level of the exit lift, a sequencing of loads, steered by the steering system, consistent with starting order limitation of N loads on said at least one exit interface conveyor;
- transfer (62), simultaneously on the K levels, of the said group of N loads from the exit lift to the exit transfer device; and
- transfer (63) of the said group of N loads, from the exit transfer device via the at least one exit interface conveyor, adhering to the said starting order limitation of N loads on said at least one exit interface conveyor.

3. Method of storing loads in an automated storage/picking system comprising:
• a steering system (950);
• at least one storage set (E1) comprising several levels, whereon loads can be removed or deposited by shuttles;
• at least one entry interface conveyor (70R, 80R) for loads entering into the system;
• an entry lift (222R) comprising K multiload levels, with K≥2, and presenting a climb/descent cycle;
• an entry transfer device (34R) comprising K multiload levels; and
• an entry sequencer (40R) provided with means of vertical displacement, the said method comprising the following steps:
- transfer (71) of loads, via the entry sequencer, from the said at least one entry interface conveyor to the entry transfer device, by forming in the entry transfer device, a group of N loads distributed over the K multiload levels, with N less than or equal to a capacity of the entry lift in number of loads, and with, for each multiload level of the entry transfer device, a sequencing of loads, steered by the steering system, consistent with a deposit limitation of N loads in the at least one multilevel storage set at the time of an iteration of the said climb/descent cycle;
- transfer (72), simultaneously on the K levels, of the said group of N loads from the entry transfer device to the entry lift; and
- at the time of an iteration of the said climb/descent cycle, transfer (72) of the said group of N loads, from the entry lift to the at least one multilevel storage set, adhering to said deposit limitation of N loads.

4. Method of storing loads in an automated storage/picking system comprising:
• a steering system (950);
• at least one storage set (E1) comprising several levels, whereon loads can be removed or deposited by shuttles;
• at least one entry interface conveyor (70R, 80R) for loads entering into the system;
• an entry lift (222R) comprising K multiload levels, with K≥2, and presenting a climb/descent cycle;
• an entry transfer device (34R) comprising K multiload levels; and provided with means of vertical displacement; and
the said method comprising the following steps:
- transfer (71) of loads, via the entry sequencer, from the said at least one entry interface conveyor to the entry transfer device, by forming in the entry transfer device, a group of N loads distributed over the K multiload levels, with N less than or equal to a capacity of the entry lift in number of loads, and with, for each multiload level of the entry transfer device, a sequencing of loads, steered by the steering system, consistent with a deposit limitation of N loads in the at least one multilevel storage set at the time of an iteration of the said climb/descent cycle;
- transfer (72), simultaneously on the K levels, of the said group of N loads from the entry transfer device to the entry lift; and
- at the time of an iteration of the said climb/descent cycle, transfer (72) of the said group of N loads, from the entry lift to the at least one multilevel storage set, adhering to said deposit limitation of N loads.
